# FASCICULE DE BREVET EUROPEEN

(11) **EP 1 965 653 B1**
(45) Date de publication et mention de la délivrance du brevet: **22.07.2009**
(21) Numéro de dépôt: 06842145.2
(22) Date de dépôt: 12.12.2006
(51) Int. Cl.: A21D 2/14, A21D 2/36

(54) **AMÉLIORANT DE PANIFICATION ET SON UTILISATION**
BACKMITTEL FÜR DIE HERSTELLUNG VON BROT UND VERWENDUNG DESSELBEN& x9;
BREADMAKING IMPROVER AND ITS USE

(30) Priorité: 13.12.2005 FR 0512610
(43) Date de publication de la demande: 10.09.2008
(73) Titulaire: Lesaffre et Compagnie, 75001 Paris (FR)
(72) Inventeur: SOUPIRON, Laurent, F-59274 Marquillies (FR); SAUNDERS, Nigel, F-59700 Marcq En Baroeul (FR); LEJEUNE, Pascal, F-59200 Tourcoing (FR)
(74) Mandataire: Touati, Catherine
(86) Numéro de dépôt international: PCT/FR2006/051335
(87) Numéro de publication internationale: WO 2007/068853

(56) Documents cités:
- EP-A- 0 815 731
- GB-A- 2 339 134
- US-A- 3 650 764
- DATABASE WPI Section Ch, Week 198043 Derwent Publications Ltd., London, GB; Class D11, AN 1980-76032C XP002388683 -& JP 55 118334 A (NIPPON PAN KOGYOKAI) 11 septembre 1980 (1980-09-11)

## Description

La présente invention concerne un améliorant de panification, et son utilisation dans un procédé de préparation d'une pâte boulangère à cuire contenant cet améliorant.

L'utilisation de la glucono-delta-lactone (GDL) en panification est connue depuis longtemps pour son effet acidifiant dans la pâte.

Dans GB-A-2339134, il a été proposé d'utiliser la GDL en combinaison avec un agent levant chimique et un agent de conservation dans la préparation d'une pâte. Les agents levants chimiques sont des mélanges de composés réactifs acides et alcalins qui réagissent lentement pour former du CO₂. Bien que les conservateurs soient utilisés dans la conservation d'aliments préparés avec des agents levants chimiques, l'addition supplémentaire de substances réductrices de pH permettant d'augmenter l'efficacité de tout conservateur réduit proportionnellement l'efficacité de l'agent levant chimique du fait des interactions entre les substances réductrices de pH et les composés réactifs alcalins de l'agent levant chimique. GB-A-2339134 enseigne un moyen permettant de faire baisser le pH et d'augmenter ainsi l'efficacité des conservateurs et donc la conservation des aliments sans affecter pour autant l'efficacité de l'agent levant chimique. Ce document antérieur enseigne en particulier l'utilisation de la GDL en combinaison avec un agent levant chimique et un conservateur, comme un réactif acide destiné à réduire le pH pour augmenter l'efficacité du conservateur sans affecter le composé réactif alcalin de l'agent levant chimique. La GDL est utilisée comme ingrédient de l'agent conservateur pour augmenter le pourcentage d'acide non dissocié du conservateur, augmentant ainsi son efficacité et, par conséquent, la durée de conservation du produit.

Il a également été proposé dans EP-A-0815731 d'utiliser la GDL en tant qu'agent générateur d'acide pour l'obtention d'une pâte fermentée acide. Ce document antérieur décrit l'hydrolyse de la GDL en milieu aqueux pour générer de l'acide gluconique, cette hydrolyse pouvant avoir lieu par exemple grâce à l'eau présente dans la pâte acide non fermentée.

Il est également connu d'utiliser en boulangerie des farines de levains secs encore appelées farines fermentées déshydratées. L'ajout de ces farines fermentées déshydratées à la pâte apporte une amélioration des qualités organoleptiques et une meilleure conservation du produit cuit. Ces farines fermentées obtenues par déshydratation ou séchage d'un levain ne contiennent plus de microorganismes actifs, mais elles contiennent encore une grande part des arômes formés pendant la fermentation du levain par les bactéries lactiques de levain et de préférence aussi les levures du levain. Ces arômes sont principalement de l'acide lactique, mais aussi les autres arômes de la fermentation du levain. Leur utilisation apporte en particulier au produit cuit un arôme acide fortement apprécié dans certaines catégories de produits cuits. Toutefois, l'incorporation dans la pâte d'une farine fermentée déshydratée n'est pas sans inconvénients. Elle a notamment un effet non négligeable sur la rhéologie de la pâte. On constate en effet que le pétrissage devient difficile : la formation du réseau glutineux nécessaire à la rétention du CO₂ produit par la levure est plus lente, voire incomplète. Les pâtes sont à la fois tenaces et poreuses, provoquant des problèmes lors du façonnage, puis sur les pains qui sont moins beaux et moins volumineux. De plus, l'acidité présente pénalise l'action fermentaire de la levure qui, de ce fait, produira moins de gaz, donnant au final des pains de volume inférieur.

De façon similaire, l'ajout d'un acide et/ou d'un sel d'acide à la pâte aboutit aux mêmes problèmes rhéologiques que ceux rencontrés lors de l'utilisation de levains secs.

Il a été constaté de manière surprenante qu'il est possible de réduire, voire d'éviter les inconvénients liés à l'utilisation d'acides et/ou de sels d'acide dans une pâte par l'ajout de la glucono-delta-lactone (GDL). En particulier, la présente invention montre qu'il est possible de bénéficier des avantages liés à l'utilisation d'une farine fermentée acide et de réduire, voire d'éviter, les problèmes rhéologiques constatés à la fois sur la pâte, mais également sur le produit de panification obtenu par cuisson de ladite pâte, par l'utilisation d'une combinaison d'une farine fermentée acide et de la glucono-delta-lactone (GDL). Il a également été constaté que la présente invention apporte un bénéfice sur les propriétés rhéologiques de la pâte mais également du produit de panification obtenu par cuisson dé ladite pâte par l'utilisation d'une combinaison d'un levain sec, liquide ou pâteux et de la GDL.

La présente invention concerne un améliorant de panification comprenant un acide et/ou un sel d'acide en combinaison avec de la glucono-delta-lactone. Dans un mode de réalisation particulier, l'améliorant consiste en un acide et/ou un sel d'acide et la glucono-delta-lactone. De préférence, l'acide et/ou le sel d'acide est un préferment acide.

On comprend par « préferment acide » un produit générant ou contenant un ou plusieurs acides choisis dans le groupe comprenant les acides organiques alimentaires, les combinaisons desdits acides, les sels alimentaires desdits acides, les combinaisons desdits sels et les combinaisons d'un ou plusieurs desdits acides avec un ou plusieurs desdits sels, et obtenu par la fermentation d'un substrat contenant de la farine au moyen d'une biomasse, ladite biomasse contenant au moins une bactérie susceptible de produire par fermentation au moins un ou plusieurs acide(s) et/ou leurs sels correspondants. Le préferment acide selon l'invention peut en particulier comprendre au moins un élément choisi dans le groupe consistant en l'acide lactique, les sels d'acide lactique, l'acide acétique, les sels d'acide acétique, l'acide propionique, les sels d'acide propionique, l'acide benzoïque, les sels d'acide benzoïque, l'acide sorbique et les sels alimentaires d'acide sorbique, et les combinaisons de ceux-ci, en particulier les combinaisons de l'un et/ou l'autre acides, de l'un et/ou l'autre sels ou l'un et/ou l'autre acides et sels.

Le préferment selon l'invention peut comprendre de manière avantageuse un des éléments choisi dans le groupe consistant en l'acide lactique, les sels d'acide lactique, l'acide acétique, les sels d'acide acétique et les combinaisons de ceux-ci.

Dans le présent contexte, le terme « préferment acide » se réfère aux levains secs, pâteux, ou liquides, tels que définis ci-après.

Selon un mode de réalisation préférentiel de l'invention, le préferment acide de l'améliorant selon la présente invention peut être un levain sec. Le levain sec correspond à un produit sec obtenu par séchage d'une pâte fermentée au moyen de microorganismes appartenant aux bactéries des levains panaires et éventuellement de levures des levains panaires. Les bactéries des levains panaires sont notamment décrites dans le Chapitre 4.2 du livre de référence « Handbuch Sauerteig - Biologie - Biochemie - Technologie » par Spicher et Stephan, 4ème édition (ISBN 3-86022-076-4). Le levain sec est également commercialisé sous les dénominations commerciales françaises : farine fermentée, farine fermentée déshydratée, farine préfermentée, levain déshydraté, sous les dénominations commerciales anglaises : dry ou dried sourdough, dry ou dried leaven ou levain, dry ou dried fermented flour, dry ou dried prefermented flour, sourdough concentrate, sourdough powder, et sour flour, et sous les dénominations allemandes Trockensauer et Sauerteigpulver. Le levain sec présent dans l'améliorant selon l'invention peut être issu d'une pâte fermentée comprenant une ou plusieurs farines de céréale(s), comprenant une ou plusieurs issue(s) de meunerie riche(s) en son ou comprenant une combinaison d'une ou plusieurs farine(s) de céréale(s) avec une ou plusieurs issue(s) de meunerie riche(s) en son, cette pâte pouvant contenir également des germes de céréales. De préférence, le levain sec est issu d'une pâte fermentée comprenant de la farine de blé et/ou de la farine de seigle, une ou plusieurs issue(s) de meunerie riche(s) en son provenant de blé et/ou une ou plusieurs issue(s) de meunerie riche(s) en son provenant de seigle ou une combinaison de farine(s) de blé et/ou de farine(s) de seigle avec une ou plusieurs issue(s) de meunerie riche(s) en son et provenant de blé et/ou de seigle. La pâte peut également contenir des germes de blé broyés.

Ces levains secs obtenus par déshydratation ou séchage ne contiennent plus de microorganismes actifs, mais ils contiennent encore une grande part des arômes formés pendant la fermentation du levain par les bactéries du levain et éventuellement aussi par les levures du levain, ces arômes étant principalement l'acide lactique, mais aussi les autres arômes de la fermentation du levain.

La dose d'acide lactique dans le levain sec est avantageusement supérieure ou égale à 50 g par kg de levain sec, et plus avantageusement d'au moins 70 g par kg de levain sec, et encore plus avantageusement d'au moins 100 g par kg de levain sec.

Selon un autre mode de réalisation préférentiel de l'invention, le préferment acide de l'améliorant selon la présente invention peut être un levain liquide, comme par exemple un levain tel que décrit dans EP 0953 288 et WO 2004/080187.

Selon une forme d'exécution, le levain liquide selon l'invention consiste en un milieu de culture à base de farine contenant au moins une farine de céréale et de l'eau, ledit milieu de culture étant ensemencé et fermenté par une sélection de microorganismes qui peut comprendre de manière avantageuse des bactéries lactiques. Lesdits microorganismes sont capables de synthétiser un ou plusieurs acides choisis dans le groupe comprenant les acides organiques alimentaires, les sels alimentaires desdits acides et les combinaisons de ceux-ci, en particulier les combinaisons desdits acides, desdits sels organiques ou d'un ou plusieurs desdits acides avec un ou plusieurs desdits sels organiques. Dans le présent contexte, on désigne par « milieu de culture à base de farine », un milieu de culture dont les matières sèches ont comme ingrédient principal une ou des farines de céréale. Le levain liquide selon l'invention contient au moins 7g/l d'acide acétique, et optionnellement de l'acide lactique. Le levain liquide suivant l'invention présente un pH entre 3,8 et 4,5.

Selon une autre forme d'exécution, le levain liquide selon l'invention consiste en du lait ou ses dérivés fermentés par des micro-organismes et contenant des acides organiques et/ou leurs sels.

Selon un autre mode de réalisation préférentiel de l'invention, le préferment acide de l'améliorant selon la présente invention peut être un levain pâteux. Un levain pâteux est par exemple un levain tel que défini au chapitre 10 dans le livre de Raymond Calvel « the taste of bread », Aspen Publishers, Inc., Gaithersburg, Maryland, 2001, n° ISBN : 0-8342-1646-9.

L'acide et/ou le sel d'acide de l'améliorant de panification est tout acide et/ou sel d'acide qui présente une capacité d'amélioration de panification. Cette capacité peut être une capacité acidifiante, conservatrice, antioxydante, épaississante ou gélifiante. Par exemple et sans être limité à cette liste, ledit acide et/ou sel d'acide peut être ou comprendre au moins un élément sélectionné dans le groupe consistant en l'acide sorbique, les sels d'acide sorbique, l'acide propionique, les sels d'acide propionique, l'acide acétique, les sels d'acide acétique, l'acide lactique, les sels d'acide lactique, l'acide malique, les sels d'acide malique, l'acide citrique, les sels d'acide citrique, l'acide ascorbique, les sels d'acide acsorbique, l'acide alginique, les sels d'acide alginique, l'acide benzoïque, les sels d'acide benzoïque et les combinaisons de ceux-ci. Les sels sont de préférence des sels alimentaires. Par exemple, les sels d'acide peuvent être les suivants : le sorbate de potassium, le sorbate de calcium, le propionate de potassium, le propionate de calcium, le propionate de sodium, l'acétate de potassium, l'acétate de calcium, l'acétate de sodium, le lactate de potassium, le lactate de calcium, le lactate de sodium, le malate de potassium, le malate de calcium, le malate de sodium, le citrate de potassium, le citrate de calcium, le citrate de sodium, le citrate d'ammonium l'ascorbate de sodium, l'ascorbate de calcium, l'alginate de sodium, l'alginate de potassium, l'alginate d'ammonium, l'alginate de calcium.

La présente invention a également pour objet l'utilisation de la glucono-delta-lactone pour améliorer la rhéologie d'une pâte à cuire contenant un préferment acide.

La présente invention présente l'intérêt d'obtenir des pains préparés à partir d'une pâte contenant un acide et/ou sel d'acide, de préférence un préferment acide, et présentant néanmoins une bonne qualité rhéologique du fait de la présence de GDL. La structure du pain, appelée aussi l'alvéolage, est liée à la capacité du gluten de la farine de créer un réseau moléculaire tridimensionnel capable de retenir le gaz produit par les levures au cours de la fermentation. Ce réseau n'est réalisé que grâce à la formation de ponts disulfures entre les macromolécules qui constituent le gluten (gliadines et gluténines), riches en cystéine. L'énergie nécessaire à la formation de ces ponts disulfures est apportée par l'action mécanique du pétrissage et presque exclusivement par elle. Par contre, une fois formé, ce réseau est particulièrement résistant, les ponts disulfures étant des liaisons fortes. La qualité de ce réseau, et sa capacité à retenir le gaz généré par la levure, permet la levée de la pâte et la structure caractéristique de la mie. Il est donc essentiel que rien ne vienne entraver la formation du réseau glutineux au cours du pétrissage. Or, les acides et/ou leurs sels pénalisent la formation des ponts disulfures. De ce fait, les pâtes sont molles, collantes et les pains sont plats. Grâce à l'utilisation de la GDL, ces problèmes rhéologiques peuvent être diminués voire évités. Ainsi, les acides et/ou sels d'acide, en particulier les préferments acides, peuvent être utilisés sans avoir les problèmes rhéologiques afférents à leur emploi.

En boulangerie, il est courant d'exprimer les quantités des ingrédients présents dans la pâte en pourcentages dits 'du boulanger'. Le pourcentage du boulanger est une méthode de calcul dans laquelle la masse totale de farine présente dans la formule de la pâte boulangère, c'est-à-dire dans la pâte finale, représente toujours 100% et la masse des autres ingrédients est calculée par rapport à cette base de farine. Dans le calcul des pourcentages du boulanger, seule la farine au sens strict, en général de blé issue du moulin, est prise en compte comme quantité de farine ramenée à 100. La farine entrant dans la farine de céréales fermentée et composant le préferment acide, quelle que soit la céréale ou les céréales, n'est pas prise en compte dans le calcul, de même que le gluten de blé, qui est bien entendu du gluten vital.

Sauf indication contraire, dans la description de l'invention ci-après, les quantités des ingrédients de la pâte boulangère sont exprimées en pourcentages du boulanger.

La présente invention concerne notamment un améliorant solide de panification comprenant un acide et/ou sel d'acide, de préférence un préferment acide, en combinaison avec de la glucono-delta-lactone et présentant une teneur en matières sèches d'au moins 85% en masse. L'améliorant peut en particulier présenter une teneur en matières sèches supérieure ou égale à 90% en masse, et encore de préférence supérieure ou égale à 94% en masse.

La forme préférentielle de l'améliorant selon la présente invention est la forme sèche. Selon une forme plus préférentielle, la forme sèche peut être pulvérulente ou en granules. La forme granulaire présente l'avantage d'être moins poussiéreuse et d'avoir une moindre tendance à se disperser dans l'air. Le diamètre moyen des particules de l'améliorant est de préférence entre 50 µm et 300 µm, encore de préférence entre 80 µm et 150 µm et encore de préférence entre 80 µm et 120 µm.

Selon une forme d'exécution de l'invention, l'améliorant peut également être liquide, pâteux ou semi humides selon sa teneur en matières sèches.

### L'améliorant peut également être semi-liquide.

Selon un mode préférentiel de la présente invention, la GDL est conditionnée sous forme de mélange au préferment acide.

Selon un autre mode préférentiel de la présente invention, le préferment acide est séparé de la GDL pendant sa conservation. Un des moyens de séparation est le conditionnement séparé de la GDL. Dans ce cas, l'incorporation se fait soit simultanément en mélangeant la GDL avec le préferment acide préalablement à l'ajout dans le pétrin, soit séparément en ajoutant chacun des deux constituants à part. Ainsi, la présente invention concerne également une association comprenant un préferment acide et de la glucono-delta-lactone utilisés de manière simultanée ou séparée dans le temps comme améliorant de panification. Lorsque le préferment acide et la glucono-delta-lactone sont introduits séparés dans le temps, la période de temps séparant l'incorporation est adaptée pour que la GDL puisse agir sur les inconvénients rhéologiques du préferment acide.

Un autre moyen de séparation est d'encapsuler la GDL afin de maintenir ses propriétés fonctionnelles jusqu'à son intervention dans la pâte. Deux types de procédés d'encapsulation sont utilisables :
- les procédés physico-chimiques comme par exemple la coacervation, l'évaporation de solvant,
- les procédés mécaniques comme par exemple le lit d'air fluidisé, la nébulisation à chaud ou à froid, l'extrusion et la centrifugation.

Tous les supports d'encapsulation compatibles en alimentaire sont envisageables pour l'encapsulation de la GDL, comme par exemple :
- les glucides : maltodextrines, amidons modifiés, cyclodextrines, saccharose, cellulose.. ;
- les gommes : extraits d'algues, gomme arabique, guar... ;
- les lipides : graisses végétales et animales hydrogénées ou non, cires, lécithines... ;
- les protéines : gélatine.

Selon un mode de réalisation particulièrement préféré, la technique d'enrobage en lit fluidisé est utilisée. Elle consiste à pulvériser un produit d'enrobage sur des particules solides fluidisées dans un courant d'air. Des produits d'enrobage très diversifiés peuvent être utilisés : dérivés de cellulose, dextrines, émulsifiants, des lipides, des dérivés de protéines, des amidons modifiés.

Lorsque l'améliorant se présente sous forme liquide, pâteux ou semi humides, l'enrobage est non hydrosoluble, et la libération de la GDL se fait par une action mécanique lors du pétrissage de la pâte.

Lorsque l'améliorant est sous la forme sèche, tous les supports d'encapsulation et d'enrobage sont envisageables.

De préférence, dans la présente invention, la GDL est utilisée entre 0,05 et 5%, encore de préférence entre 0,1 et 3% et encore de préférence entre 0,1 et 1,5% en pourcentages du boulanger.

L'améliorant selon l'invention peut également comprendre un ou plusieurs ingrédients présentant un effet d'améliorant, et notamment un ou plusieurs ingrédients choisis dans le groupe consistant en l'acide ascorbique, des émulsifiants, des agents stabilisants-épaississants et des enzymes. L'améliorant selon l'invention peut ainsi comprendre un ou plusieurs ingrédients présentant un effet d'améliorants, tels que :
- l'acide ascorbique,
- la L-cystéine ou la levure désactivée,
- des agents stabilisants-épaississants comme :
   ○ la farine prégélatinisée, les amidons modifiés,
   ○ le CMC (carboxyméthylcellulose),
   ○ des gommes, comme par exemple la gomme de xanthane,
   ○ des extraits d'algues comme des alginates ou des carraghénates, ou
   ○ une combinaison de ces différents agents stabilisants-épaississants,
- des émulsifiants, comme par exemple:
   ○ la lécithine, ou
   ○ les mono- et diglycérides d'acides gras, ou
   ○ les esters diacétyltartriques de mono- et diglycérides d'acides gras, etc, ou encore
   ○ une combinaison d'un ou plusieurs émulsifiants comme ceux cités ci avant,
- des enzymes, comme par exemple :
   ○ des amylases, et en particulier des alpha-amylases, dont par exemple des alpha-amylases maltogènes ou d'autres alpha-amylases antirassissantes,
   ○ des hémicellulases, et en particulier les xylanases,
   ○ des glucoses oxydases,
   ○ des amyloglucosidases,
   ○ des phospholipases, etc, ou
   ○ des combinaisons desdites enzymes,
- et des farines de céréales, ou d'autres ingrédients caractéristiques de la composition de pains spéciaux.

L'améliorant peut également comprendre d'autres ingrédients alimentaires, et en particulier de tels ingrédients alimentaires hydrosolubles utilisés en boulangerie et notamment ceux qui ont un effet d'améliorant de panification. Des exemples d'un tel ingrédient alimentaire sont le monochlorhydrate de L-cystéine et le chlorure de calcium. De manière préférentielle, l'améliorant selon l'invention comprendra tous les oxydants de la pâte, éventuellement tous les réducteurs de la pâte, toutes les préparations enzymatiques nécessaires au type de panification envisagée, qu'il s'agisse de la fabrication, quel que soit le procédé, de pains, de viennoiseries, de brioches, et de manière générale de toute pâte fermentée.

L'améliorant peut également comprendre un ou plusieurs autres ingrédients non spécifiés ci-dessus.

Dans le présent contexte, les termes « panification », « boulangerie » et « boulanger » doivent être interprétés de manière large comme se préférant aux domaines de la boulangerie et de la viennoiserie, et en général au domaine de la production de produits cuits au four à partir de pâtes fermentées à base de farine de céréales. Plus précisément, les pâtes sont fermentées par des levures. Ceci exclut les produits obtenus par des agents levants chimiques. fermentée, de l'eau, de la levure de panification, comprenant l'incorporation dans la pâte d'un améliorant selon l'invention.

La préparation d'une pâte de boulangerie prête à être cuite au four est un processus comprenant plusieurs étapes, y compris au moins une étape de pétrissage et au moins une étape de fermentation. De préférence, les éléments de l'améliorant selon l'invention sont incorporés à la pâte avant ou pendant l'étape de pétrissage, de préférence avant ou en début de l'étape de pétrissage.

L'eau de la pâte peut être incorporée dans la pâte en tant que telle ou encore partiellement ou totalement sous forme d'un mélange avec d'autres ingrédients ou sous forme d'un ingrédient à humidité élevée, comme par exemple du lait.

L'invention concerne donc un procédé de préparation de pâte pour produit de boulangerie comprenant l'ajout de la GDL et de l'acide et/ou du sel d'acide, de préférence du préferment acide, aux autres ingrédients de la pâte. Grâce à la présente invention, le boulanger dispose maintenant d'une pâte pour produit de boulangerie comprenant :
- de la farine de céréale(s) non-fermentée,
- de la levure de panification, c'est-à-dire de la levure active,
- un acide et/ou sel d'acide, de préférence un préferment acide, et
- de la GDL,
l'acide et/ou sel d'acide et la GDL de cette pâte étant tels que définis ci-dessus en rapport à l'améliorant selon l'invention.

La levure de panification est par définition la levure active ou vivante qui va assurer la fermentation de la pâte.

Suivant l'invention, la pâte pour produit de boulangerie peut notamment être préparée selon des procédés de panification directs, dits « straight dough », ou indirects, comme le procédé dit « Sponge and Dough » (« levain-levure » en français), le procédé « No-Time Dough » (« sans temps de fermentation de la pâte en masse » en français) ou par tout autre procédé de panification.

Selon l'invention et conformément à la pratique, on entendra par procédé indirect « sponge et dough », une méthode de fabrication du pain, dans laquelle une première étape consiste à mélanger de l'eau, une.partie de la farine, et habituellement la totalité de la levure de panification et des ingrédients nutritifs utiles pour la levure, réalisant ainsi un sponge. Ce mélange est mis à fermenter jusqu'à ce qu'on le juge prêt à être utilisé pour réaliser la pâte par incorporation des autres ingrédients du pain (définition extraite du livre « Glossary of Milling and Baking terms », Samuel A. Matz, Pan-tech International, 1993).

D'une manière plus générale, l'améliorant et les procédés selon l'invention utilisant cet améliorant sont utiles pour la réalisation de pâtes ou produits cuits de boulangerie, notamment pains courants, c'est-à-dire pains ne contenant ni matière grasse ni sucre ajouté, pour la réalisation de pains de mie, de viennoiseries, de brioches, de pains spéciaux, et en général, pour la réalisation de tous les pains de type non courant comportant des matières grasses et/ou du sucre ajouté. Ainsi, l'améliorant et les procédés selon l'invention conviennent également pour la réalisation de pâte ou produits cuits tels que fabriqués par exemple aux Etats-Unis d'Amérique, c'est-à-dire contenant de préférence une quantité de sucre ajouté variant de 0,5 à 16% en matières sèches en pourcentages du boulanger, et/ou une quantité de matières grasses ajoutées, par exemple l'huile, variant de 0,5% à 10% en pourcentage de boulanger et notamment ceux obtenus par le procédé Sponde and Dough, ou No Time Dough.
En particulier, l'invention concerne un procédé pour la préparation de produits cuits comprenant :
- la préparation d'une pâte contenant de la farine non-fermentée, de l'eau, de la levure de panification, et comprenant l'incorporation dans la pâte d'un améliorant selon la présente invention,
- la fermentation de la pâte, et
- la cuisson de la pâte levée avec obtention d'un produit cuit,
ledit procédé comprenant éventuellement un laminage de la pâte entre les étapes de préparation et de fermentation.

L'invention a particulièrement pour objet un procédé pour la préparation de produits cuits tel que défini ci-dessus, dans lequel le produit cuit est sélectionné parmi le groupe constitué des pains de type courant et des pains de type non courant notamment du pain de mie, des viennoiseries, des brioches, des pains spéciaux.

Dans un mode de réalisation particulier du procédé, le produit cuit peut être tranché et/ou emballé. De préférence, le produit cuit est sélectionné parmi le groupe constitué du pain de type français, du pain de mie, des viennoiseries, des brioches, et des pains spéciaux.

L'invention permet également au boulanger de réaliser des produits cuits de bonne qualité avec des pâtes comprenant de la farine de céréale(s) non-fermentée, de la levure de panification, un préferment acide et de la GDL.

La pâte peut être une pâte fermentée, de préférence choisie dans le groupe des pâtes à pains, pâtes pour brioches ou pâtes pour viennoiseries, de telles pâtes pouvant être utilisées dans le cadre des technologies du direct, du précuit ou du surgelé.

Selon un mode de réalisation préféré, l'invention concerne en particulier de telles pâtes crues surgelées (en anglais : frozen doughs).

Selon un mode de réalisation particulièrement préféré, l'invention concerne également des pâtons précuits (en anglais : parbaked doughs), ou des pâtons précuits surgelés (en anglais : parbaked frozen doughs), pouvant être obtenus par fermentation, pré-cuisson et surgélation d'une pâte selon l'invention.

Ainsi, l'invention concerne un procédé pour la préparation de produits précuits surgelés comprenant :
- la préparation d'une pâte comprenant de la farine non-fermentée, de l'eau, de la levure de panification, dans laquelle a été incorporé de la GDL et un acide et/ou sel d'acide, de préférence un préferment acide, notamment un améliorant selon l'invention,
- la fermentation de la pâte,
- la cuisson partielle de la pâte levée avec obtention d'un produit précuit, et
- la surgélation du produit précuit,
ledit procédé comprenant éventuellement un laminage de la pâte entre les étapes de préparation et de fermentation.

Les avantages de la présente invention sont illustrés dans l'exemple comparatif ci-après qui, bien entendu n'est pas limitatif.

### EXEMPLE 1

Le bénéfice de l'invention est illustré par une étude à l'extensographe Brabender. Ce test consiste à étirer un boudin de pâte ne contenant pas de levure jusqu'à sa rupture.

Une mesure de la résistance à l'extension est pratiquée pendant toute l'expérience.

### Protocole

- Pétrissage
   1. Détermination préalable du pouvoir d'absorption de la farine (méthode AFNOR n°V30-171/1).
   2. Allumer le bain-marie environ 30 minutes avant le premier pétrissage (jusqu'à obtention de la température de consigne de 30°C).
   3. Formule du boudin de pâte:
      Farine: équivalent de 300g à 14% d'humidité
      Eau : Ajouter la quantité d'eau nécessaire pour être à 500 unités farinographe (UF) à la fin du pétrissage.
      Sel:6g
   4. Placer la farine, le sel et l'une quelconque des formules suivant l'invention dans la cuve du pétrin.
   5. Déclencher le chronomètre en même temps que l'eau commence à être introduite.
   6. Pétrissage au farinographe Brabender en vitesse 2 pendant 1 minute.
   7. Repos : 5 min.
   8. Pétrissage : 8 min.
   9. La consistance finale doit être de 500 UF : si ce n'est pas le cas, modifier la quantité d'eau en conséquence et reprendre à l'étape 2.
- Préparation des échantillons
   9. Peser 2 échantillons de 150 ± 0,1g de pâte.
   10. Placer dans la bouleuse et compter 20 tours.
   11. Placer délicatement la pâte dans la façonneuse.
   12. Lorsque le pâton sort de la façonneuse, déclencher le chrono décomptant le temps de repos.
   13. Placer le cylindre de pâte obtenu sur un support légèrement graissé et le griffer avec la partie supérieure.
   14. Stocker en chambre humide régulée à 30°C.
- Test d'extension
   15. Après une période de repos de 20 min, placer l'échantillon sur le bras de l'extensographe.
   16. Ajuster la position du stylet de manière à ce qu'il soit sur la ligne du zéro avec la vis placer sur le stylet.
   17. A t₂₀ₘᵢₙᵤₜₑₛ précisément, déclencher le mouvement du crochet, et l'arrêter lorsque le cylindre de pâte se rompt.
   18. Remettre en forme la pâte (boulage-façonnage) et la stocker à nouveau 45 min.
   19. Reprendre à l'étape 17 pour le deuxième pâton.
   20. A t₆₅ : idem qu'à t₂₀ (reprendre l'étape 17).
   21. A t₁₁₀ : idem qu'à t₂₀ (reprendre l'étape 17).
   L'extensographe Brabender fournit essentiellement 2 valeurs :
   * la résistance maximale avant la rupture du pâton, exprimée en unité spécifique (U.E.),
   * l'extension maximale avant la rupture du pâton, exprimée en mm.

- Nature des échantillons
   Deux compositions selon l'invention ont été testées.

### Test 1 :

* Formule A : 2% levain sec + 0,5% GDL
   Cette composition a été comparée à des formules ne contenant que du levain sec, ou une combinaison de levain sec et d'acide lactique. Les compositions alternatives B et C ont été formulées de façon à atteindre le même pH de fin d'apprêt (fin de pétrissage + 2 heures),
* Formule B : 3,5% levain sec
* Formule C : 2% levain sec + 0,2% d'acide lactique
Pour se rapprocher des conditions boulangères, les pâtes effectuées avec les formules alternatives ont été réalisées à consistance constante (et non à hydratation constante) mesurée au farinographe.
Enfin, afin d'avoir un élément de comparaison, les expériences ont été réalisées sur une pâte témoin sans aucun ajout (= formule D).

### Test 2 :

* Formule A' : 2% levain sec + 1 % GDL
* Formule B' :5% levain sec
* Formule C' : 2% levain sec + 0,4% d'acide lactique
* Formule D' : pâte sans aucun ajout

• Résultats
Comparaison des formules A, B, C, et D = Test 1

| Formule | **A** | B | C | D |
|---|---|---|---|---|
| **Résistance à 20 min (U.E.)** | **847** | **>1000** | **>1000** | **530** |
| Résistance à 65 min | >1000 | >1000 | >1000 | 540 |
| Résistance à 110 min | >1000 | >1000 | >1000 | 600 |
| **Extensibilité à 20 min (mm)** | **101** | **76** | **84** | **146** |
| Extensibilité à 65 min | 86 | 69,5 | 70 | 153 |
| Extensibilité à 110 min | 78 | 63 | 71 | 132 |

Comparaison des formules A', B', C' et D' = Test 2

| Formule | **A'** | B' | C' | D' |
|---|---|---|---|---|
| **Résistance à 20 min (U.E.)** | **857** | **>1000** | **>1000** | **530** |
| Résistance à 65 min | >1000 | >1000 | >1000 | 540 |
| Résistance à 110 min | >1000 | >1000 | >1000 | 600 |
| **Extensibilité à 20 min (mm)** | **100** | **64,5** | **59** | **146** |
| Extensibilité à 65 min | 86 | 55,5 | 63 | 153 |
| Extensibilité à 110 min | 66 | 58,5 | 58 | 132 |

La résistance de la pâte est l'image d'une part de la force maximale à appliquer pour allonger le pâton, et d'autre part de la résistance à la pression gazeuse. Autrement dit, plus la résistance est élevée, plus la résistance à la pression le sera également et par conséquent moins les pains auront du volume. Cette résistance est plus faible pour la formule A selon l'invention contenant un levain sec et de la GDL que pour les combinaisons levain seul (B) et levain + acide lactique (C). Ceci démontre parfaitement que le fait d'ajouter de la GDL au levain sec permet de diminuer significativement les inconvénients rhéologiques liés à l'utilisation de levain, en diminuant d'une part la résistance de la pâte.

D'autre part, les bénéfices rhéologiques liés à l'utilisation de la GDL en combinaison avec un levain sont également mesurables grâce à l'extensibilité. L'extensibilité est l'allongement maximal du pâton avant rupture. Plus l'extensibilité est grande et plus la mise en forme sera facilitée. La pâte réalisée avec une combinaison de levain et de GDL (A) présente une bien meilleure extensibilité que celle réalisée avec du levain uniquement (B) ou du levain en combinaison avec de l'acide lactique (C).

Les mêmes conclusions positives sur l'utilisation de la GDL en combinaison avec du levain sec peuvent être faites pour le test 2.

## Revendications

1. Améliorant de panification comprenant un préferment acide et de la glucono-delta-lactone (GDL), ledit préferment acide étant un levain sec, pâteux ou liquide.

2. Améliorant de panification selon la revendication 1, **caractérisé en ce que** le préferment acide est un levain sec.

3. Améliorant selon la revendication 1 ou 2, **caractérisé en ce que** l'améliorant a une teneur en matières sèches d'au moins 85%, de préférence supérieure ou égale à 90% en masse et encore de préférence supérieure ou égale à 94% en masse.

4. Améliorant selon l'une des revendications 1 à 3, **caractérisé en ce que** l'améliorant est solide, notamment sous forme pulvérulente ou granulaire, semi-humide, pâteux, semi-liquide ou liquide.

5. 6 Améliorant selon l'une des revendications 1 à 4, **caractérisé en ce que** la glucono-delta-lactone est conditionnée sous forme de mélange au préferment acide.

6. 7 Améliorant selon l'une des revendications 1 à 5, **caractérisé en ce que** la glucono-delta-lactone est conditionnée séparément du préferment acide.

7. Améliorant selon la revendication 6, **caractérisé en ce que** la glucono-delta-lactone est encapsulée.

8. Améliorant selon l'une des revendications 1 à 7, **caractérisé en ce que** le préferment acide comprend au moins un élément sélectionné dans le groupe consistant en l'acide lactique, les sels d'acide lactique, l'acide acétique, les sels d'acide acétique, l'acide propionique, les sels d'acide propionique, l'acide benzoïque, les sels d'acide benzoïque, l'acide sorbique et les sels alimentaires d'acide sorbique, l'acide malique, les sels d'acide malique, l'acide citrique, les sels d'acide citrique, l'acide ascorbique, les sels d'acide ascorbique, l'acide alginique, les sels d'acide alginique et les combinaisons ceux-ci.

9. Améliorant selon l'une des revendications 1 à 8, comprenant également un ou plusieurs ingrédients choisis dans le groupe consistant en l'acide ascorbique, la L-cystéine ou la levure désactivée, des émulsifiants, des agents stabilisants/épaississants et des enzymes.

10. Procédé de préparation d'une pâte boulangère à cuire avec des ingrédients comprenant au moins de la farine non-fermentée, de l'eau, de la levure de panification, **caractérisée en ce qu'**il comprend l'incorporation dans la pâte d'un améliorant selon l'une des revendications 1 à 9.

11. Procédé pour la préparation de produits cuits comprenant :
1 la préparation d'une pâte contenant de la farine non-fermentée, de l'eau, de la levure de panification, et comprenant l'incorporation dans la pâte d'un améliorant selon l'une des revendications 1 à 9,
2 la fermentation de la pâte, et
3 la cuisson de la pâte levée avec obtention d'un produit cuit,
ledit procédé comprenant éventuellement un laminage de la pâte entre les étapes de préparation et de fermentation.

12. Procédé selon la revendication 11, dans lequel le produit cuit est sélectionné parmi le groupe constitué des pains de type courant, et des pains de type non courant, notamment du pain de mie, des viennoiseries, des brioches, des pains spéciaux.

13. Utilisation de la glucono-delta-lactone pour améliorer la rhéologie d'une pâte à cuire contenant un préferment acide.

14. Procédé pour la préparation de produits précuits surgelés comprenant :
- la préparation d'une pâte comprenant de la farine non-fermentée, de l'eau, de la levure de panification, dans laquelle a été incorporé un améliorant selon l'une des revendications 1 à 9,
- la fermentation de la pâte,
- la cuisson partielle de la pâte levée avec obtention d'un produit précuit, et
- la surgélation du produit précuit,
ledit procédé comprenant éventuellement un laminage de la pâte entre les étapes de préparation et de fermentation.

## Claims

1. Baking improver comprising an acid preferment and glucono-delta-lactone (GDL), said preferment being a dry, pasty or liquid leaven.

2. Baking improver according to claim 1, **characterized in that** the acid preferment is a dry leaven.

3. Improver according to claim 1 or 2, **characterized in that** the improver has a dry matter content of at least 85%, preferably greater than or equal to 90% by mass and preferably still greater than or equal to 94% by mass.

4. Improver according to anyone of claims 1-3, **characterized in that** the improver is solid, in particular in pulverulent or granular form, semi-moist, pasty, semi-liquid or liquid.

5. Improver according to anyone of claims 1-4, **characterized in that** the glucono-delta-lactone is packaged in the form of a mixture with the acid preferment.

6. Improver according to anyone of claims 1-4, **characterized in that** the glucono-delta-lactone is package separately from the acid preferment.

7. Improver according to claim 6, **characterized in that** the glucono-delta-lactone is encapsulated.

8. Improver according to anyone of claims 1-7, **characterized in that** the acid preferment comprises at least one component selected from the group consisting of lactic acid, lactic acid salts, acetic acid, acetic acid salts, propionic acid, propnionic acid salts, benzoic acid, benzoic acid salts, sorbic acid and dietary salts of sorbic acid, malic acid, malic acid salts, citric acid, citric acid salts, ascorbic acid, ascorbic acid salts, alginic acid, agilnic acid salts and combinations thereof.

9. Improver according to anyone of claims 1-8, also comprising one or more ingrdients chosen from the group consisting of ascorbic acid, L-cysteine or deactivated yeast, emulsifiers, stabilizers/thickeners and enzymes.

10. Process for preparing a baker's dough for baking with ingredients comprising at least unfermented flour, water, bread-making yeast, **characterized in that** it comprises the incorporation of an improver according to anyone of claims 1-9 into the dough.

11. Process for the preparation of baked products comprising:
1. the preparation of a dough comprising unfermented flour, water, bread-making yeast, and comprising the incorporation to the dough of an improver according to anyone of claims 1-9,
2. the fermentation of a dough, and
3. the baking of the raised dough with production of a baked product,
said process optionally comprising laminating the dough between the steps of preparation and fermentation.

12. Process according to claim 11, in which the baked product is selected from the group consisting of breads of the common type and breads of the uncommon type, in particular sandwich bread, "viennoiseries", brioches, and special breads.

13. Use of the glucono-delta-lactone to improve the rheology of a dough for baking containing an acid preferment.

14. Process for the preparation of frozen prebaked products comprising:
the preparation of a dough containing unfermented flour, water, bread-making yeast, into which an improver according to anyone of claims 1-9 has been incorporated,
the fermentation of the dough,
the partial baking of the raised dough with production of a prebaked product, and
the freezing of the prebaked product,
said process optionally comprising laminating the dough between the steps of preparation and fermentation.

## Patentansprüche

1. Backhilfsmittel, das ein saures Proferment und Glucono-delta-Lacton (GDL) umfasst, wobei das saure Proferment ein trockener, teigförmiger oder flüssiger sauerteig ist.

2. Backhilfsmittel nach Anspruch 1, **dadurch gekennzeichnet, dass** das Proferment ein trockenes Treibmittel ist.

3. Backhilfsmittel nach Anspruch 1 oder 2, **dadurch gekennzeichnet, dass** das Backhilfsmittel einen Trockensubstanzgehalt von mindestens 85 Massen-%, bevorzugt größer als oder gleich 90 Massen-% und stärker bevorzugt größer oder gleich 94 Massen-% aufweist.

4. Backhilfsmittel nach einem der Ansprüche 1 bis 3, **dadurch gekennzeichnet, dass** das Backhilfsmittel fest ist, insbesondere in pulverartiger oder körniger, halbfeuchter, teigförmiger, halbflüssiger oder flüssiger Form.

5. Backhilfsmittel nach einem der Ansprüche 1 bis 4, **dadurch gekennzeichnet, dass** das Glucono-delta-Lacton als Mischung mit dem sauren Proferment konditioniert wird.

6. Backhilfsmittel nach einem der Ansprüche 1 bis 4, **dadurch gekennzeichnet, dass** das Glucono-delta-Lacton getrennt von dem sauren Proferment konditioniert wird.

7. Backhilfsmittel nach Anspruch 6, **dadurch gekennzeichnet, dass** das Glucono-delta-Lacton eingekapselt ist.

8. Backhilfsmittel nach einem der Ansprüche 1 bis 7, **dadurch gekennzeichnet, dass** das saure Proferment mindestens einen Bestandteil, ausgewählt aus der Gruppe bestehend aus Milchsäure, den Salzen der Milchsäure, Essigsäure, den Salzen der Essigsäure, Propionsäure, den Salzen der Propionsäure, Benzoesäure, den Salzen der Benzoesäure, Sorbinsäure und den Speisesalzen der Sorbinsäure, Äpfelsäure, den Salzen der Äpfelsäure, Zitronensäure, den Salzen der Zitronensäure, Ascorbinsäure, den Salzen der Ascorbinsäure, Alginsäure, den Salzen der Alginsäure und Kombinationen davon umfasst.

9. Backhilfsmittels nach einem der Ansprüche 1 bis 8, das ebenfalls einen oder mehrere Bestandteil(e) ausgewählt aus der Gruppe bestehend aus Ascorbinsäure, L-Cystein oder deaktivierter Hefe, Emulgatoren, Stabilisierungs-/Dickungsmitteln und Enzymen umfasst.

10. Verfahren zur Herstellung eines Backwarenteigs zum Backen mit Bestandteilen, die mindestens nicht fermentiertes Mehl, Wasser, Brothefe umfassen, **dadurch gekennzeichnet, dass** es das Einarbeiten eines Backhilfsmittels nach einem der Ansprüche 1 bis 9 in den Teig umfasst.

11. Verfahren zur Herstellung von Backwaren, umfassend:
1 die Herstellung eines Teigs, der nicht fermentiertes Mehl, Wasser, Brothefe enthält, und umfassend das Einarbeiten eines Backhilfsmittels nach einem der Ansprüche 1 bis 9 in den Teig,
2 die Fermentation des Teigs und
3 das Backen des aufgegangenen Teigs mit Erhalt einer Backware,
wobei das Verfahren gegebenenfalls Auswalzen des Teigs zwischen den Schritten Herstellung und Fermentation umfasst.

12. Verfahren nach Anspruch 11, wobei die Backware ausgewählt ist aus der Gruppe bestehend aus üblichen Brotsorten, nicht üblichen Brotsorten, insbesondere Toastbrot, Kleingebäck ("Viennoiserie"), Brioches, besondere Brote.

13. Verwendung von Glucono-delta-Lacton, um die Rheologie eines Teigs zum Backen, der ein saures Proferment enthält, zu verbessern.

14. Verfahren zur Herstellung von vorgebackenen, gefrorenen Erzeugnissen, umfassend:
- die Herstellung eines Teigs, der nicht fermentiertes Mehl, Wasser, Brothefe enthält, in den ein Backhilfsmittel nach einem der Ansprüche 1 bis 9 eingefügt worden war,
- die Fermentation des Teigs,
- das teilweise Backen des aufgegangenen Teigs mit Erhalt eines vorgebackenen Erzeugnis und
- das Einfrieren des vorgebackenen Erzeugnis,
wobei das Verfahren gegebenenfalls Auswalzen des Teigs zwischen den Schritten Herstellung und Fermentation umfasst.
